# EUROPEAN PATENT APPLICATION

(11) **EP 2 298 843 A1**
(43) Date of publication of application: **23.03.2011**
(21) Application number: 11000030.4
(22) Date of filing: 19.10.2007
(51) Int. Cl.: C09J 5/06, C09J 7/02, C09J 11/00

(54) **An adhesive tape**

(62) Divisional of application: 07819168.1
(71) Applicant: NITTO EUROPE N.V, 3600 Genk (BE); Nitto Denko Corporation, Ibaraki-shi, Osaka 567-8680 (JP)
(72) Inventor: Bossaert, Greet, 3600 Genk (BE); Forier, Bart, 3600 Genk (BE); Vandenholt, Myriam, 3600 Genk (BE); Eevers, Walter, 3600 Genk (BE); Tosaki, Yutaka, Ibaraki-shi Osaka 567-8680 (JP)
(74) Representative: Engelhard, Markus

(57) **Abstract**

The present invention relates to an adhesive tape comprising:
- a layer of a thermally shrinkable polymer, said layer having two surfaces opposite each other,
- a layer of a pressure sensitive adhesive composition on one of said two surfaces, said pressure sensitive adhesive composition comprising an amorphous polymer, thermally expandable particles and at least one blocked isocyanate compound,
a method of manufacturing thereof and to uses thereof.
More specifically, the present invention relates to an adhesive tape that can be used as such in order to join two entities with their respective surfaces together and/or to attach an entity on the surface of a substrate, whilst the peel adhesion is reduced, i.e. the tape can be removed easily, if desired.

## Description

The present invention relates to an adhesive tape, a method of manufacturing thereof and to uses thereof.

More specifically, the present invention relates to an adhesive tape that can be used as such in order to join two entities with their respective surfaces together and/or to attach an entity on the surface of a substrate, whilst the peel adhesion is reduced, i.e. the tape can be removed easily, if desired.

### BACKGROUND OF THE INVENTION

The present invention is aimed at the provision of pressure sensitive adhesive tapes which are suitable to adhere a variety of substrates in various places, such as in a car or other applications, but which can, at a certain specific moment in time, be removed in a fairly simple way, with leaving no or as little as possible residue.

The interest for this type of technology is clearly present in e. g. the automotive market. More and more car-manufacturers are focusing on this type of progression. An example of this is the Renault "Ellypse", environmentally friendly and designed for easy dismantling, removal and recycling of components (Paris Motor Show 2002). Also the adhesive industry pays a lot of attention to this problem.

The application of double-sided tapes in the automotive industry is already established. Adhering components is in comparison with screwing much less labour-intensive and much easier. Up till now however the question has always been for the adhesion-force to be as high as possible, as the construction of course has to stay intact during the total lifecycle of the vehicle. The question that now arises for an easy and smooth removal of the materials and thus of the adhesive during disassembly, in principle totally conflicts with one another.

US 5.888.650 discloses a temperature responsive adhesive article. The article comprises (a) a temperature responsive carrier capable of changing its shape at a first transition temperature (b) a thermomorphic pressure sensitive adhesive comprising a continuous crystalline polymer component. It is said that the article of the invention provides a wide variety of bonding and debonding properties, in order to create repositionable adhesives.

US 6288170 describes a thermosetting adhesive comprising a polyepoxide resin to form a semi-structural bond, a curing agent and polymeric microspheres that is inseparable at use temperature but at higher temperature clearly can be removed from a substrate.

EP1033393, EP1126001, JP6184504, EP0612823 describe heat peelable pressure sensitive adhesive sheets containing heat expandable particles. When heated, the heat expandable particles expand, creating an uneven deformation and thus adhesive force to an adherend is lower. It is used a.o. in electronic applications.

EP1111020 describes the use of a thermally activatable material, which is homogeneously divided in the adhesive agent (for two-component-adhesives). Upon heating, this additive will generate gas or water vapor. The expansion pressure will create stress and weaken the strength of the adhesive layer.

WO00/75254 uses thermo expandable microspheres for easily removing (car) windows in an adhesive agent.

JP 2000-319600 discloses a double-sided adhesive tape, wherein two adhesive layers sandwich a thermally shrinkable film. The document discloses no further detail with respect to the chemical nature of the thermally shrinkable film, other than that this film may be made of polyethylene, polypropylene, polyester, polyvinylchloride, polystyrene or polyvinylidene chloride. The adhesive layers are based on rubber with an acrylic binder.

None of the aforementioned prior art documents provide for tapes that have strong adhesion and allow for a good connection between two surfaces, whilst at the same time having a reduced peel adhesion, once it is desired to dismantle and separate the surfaces joined by the adhesive tape.

Accordingly, it was an object of the present invention to provide for an adhesive tape having improved qualities with respect to the prior art.

More specifically, it was an object of the present invention to provide for a tape that provides strong adhesion and, if desired, a reduced peel adhesion.

All these objects are solved by an adhesive tape comprising:
- a layer of a thermally shrinkable polymer, said layer having two surfaces opposite each other,
- a layer of a pressure sensitive adhesive composition on one of said two surfaces, said pressure sensitive adhesive composition comprising an amorphous polymer, and thermally expandable particles.

The objects are also solved by an adhesive tape comprising:
- a layer of a thermally shrinkable polymer, said layer having two surfaces opposite each other,
- a layer of a pressure sensitive adhesive composition on one of said two surfaces, said pressure sensitive adhesive composition comprising an amorphous polymer and at least one blocked isocyanate compound.

The objects are also solved by an adhesive tape comprising:
- a layer of a thermally shrinkable polymer, said layer having two surfaces opposite each other,
- a layer of a pressure sensitive adhesive composition on one of said two surfaces, said pressure sensitive adhesive composition comprising an amorphous polymer, thermally expandable particles and at least one blocked isocyanate compound.

The adhesive tape according to the present invention has an initial adhesion force from 1300 cN/20 mm to 3000 cN/20 mm at a tensile velocity of 300 mm/min, and the adhesion is reduced by more than 10% of its original value, upon heating said tape to a temperature in the range of from 100°C to 220°C for a period of 1 min to 10 min, preferably 5 - 7 min, most preferably 6 min.

In a preferred embodiment said adhesive tape has an initial adhesive force of more than 1400 cN/20 mm at a tensile velocity of 300 mm/min, and the adhesion is reduced preferably by more than 50% of its original value upon heat treatment.

A person skilled in the art knows how to adjust the initial adhesion force to a specific value, simply by appropriate choice of the adhesive and its composition. Ways for achieving this are described in the Examples.

In one embodiment said thermally shrinkable polymer is a heat shrinkable polymer.

Preferably, said layer of said heat shrinkable polymer reduces its surface area by 20% - 90%, with reference to its surface area at 15°C to 30°C, as measured upon heating said tape to 120°C for a period of from 1 to 10 minutes, preferably 5 to 10 minutes.

In one embodiment said heat shrinkable polymer is a polyolefine, such as polyethylene, polypropylene, and mixtures of polyolefines, fluoropolymers, neoprene and silicone rubbers, and mixtures of any of the foregoing.

Preferably, said layer of a heat shrinkable polymer has monoaxial or biaxial shrink behavior.

In one embodiment said layer of a thermally shrinkable polymer shrinks upon heating said layer to a temperature in the range of 65°C to 220°C.

Preferably, said amorphous polymer is a natural rubber, a synthetic rubber, an acrylic polymer, a vinyl ether polymer, a polyurethane polymer, or a silicone polymer, or a combination of any of the foregoing.

In one embodiment said amorphous polymer is an acrylic polymer, wherein, preferably, said acrylic polymer is a poly(acrylate) , wherein the acrylic polymer can be composed of monomers such as alkylacrylates or alkylmethacrylates, each having 1 to 18 carbon atoms in the alkyl group.

Examples (without restrictions to these examples) of the alkyl(meth)acrylate include methyl(meth)acrylate, ethyl(meth)acrylate, propyl(meth)acrylate, isopropyl(meth)acrylate, butyl(meth)acrylate, isobutyl(meth)acrylate, 2-ethylhexyl(meth)acrylate, octyl(meth)acrylate, nonyl(meth)acrylate, isononyl(meth)acrylate, decyl(meth)acrylate, dodecyl(meth)acrylate,. Those alkyl (meth) acrylates can be used alone or as mixtures of two or more thereof.

It is preferred that the above described alkyl(meth)acrylate is used as the main component together with other copolymerisable monomers.

It is preferred that the above described alkyl(meth)acrylate is used in an amount of 30% by weight or more based on the whole amount of monomer components.

The acrylic polymer of present invention may be further composed of copolymerisable monomers . It is preferred that this group of copolymerisable monomers is used in an amount of 70% by weight or less based on weight of the total monomers containing the above described alkyl(meth)acrylate.

It is even more preferable that this group of copolymerisable monomers are used in an amount of 10 to 40% by weight or less based on the weight of the total monomers containing the above described alkyl(meth)acrylate.

Examples (without restricitions to these examples) of this group of copolymerisable monomers include carboxyl containing ethylenically unsaturated monomers such as (meth)acrylic acid, itaconic acid, maleic acid and fumaric acid or polar group containing monomers such as hydroxyl-epoxy-amido or amino containing monomers or vinylacetate, styrene, acrylonitrile (known in the art as modifier monomers)or hydroxyl group containing monomers such as hydroxyethyl(meth)acrylate, hydroxypropyl(meth)acrylate, and hydroxybutyl(meth)acrylate.

The acrylic polymer can be prepared by polymerisation methods as examplified by (but not restricted to those): solution polymerisation, emulsion polymerisation, block polymerisation, or UV polymerisation (polymerisation by irradiation with ultraviolet light).

The polymerisation is further preferably carried out with an initiator capable of forming radicals upon decomposition at a temperature between 40 and 100°C. Examples of preferred initiators are (but not limited to this list) azo based polymerisation initiators such as 2,2'-azobisisobutyronitrile, 2,2'-azobis (4methoxy-2,4-dimethylvaleronitrile), 2,2'-azobis (2,4-dimethylvaleronitrile), 2,2'-azobis(2-methylbutyronitrile), 1,1'-azobis-(cyclohexane-1 - carbonitrile), 2,2'-azobis(2,4,4-trimethylpentane), and dimethyl 2,2'-azobis(2-methylpropionate) and peroxide based polymerisation initiators such as benzoyl peroxide, t-butyl hydroperoxide, di-t-butyl peroxide, t-butyl peroxybenzoate, dicumyl peroxide, 1,1-bis (t-butylperoxy)-3,3,5-trimethylcyclohexane, and 1,1-bis(t-butylperoxy)cyclododecane.

The polymerisation initiator can be used alone or as mixtures of two or more thereof. It is preferred that this polymerisation initiator is used in an amount of 0.01 to 1 part by weight based on 100 parts by weight of the total monomer components.

The polymerisation can be further executed in the presence of a chain transfer agent. Examples of these chain transfer agents include (but are not limited to this list) 2-mercaptoethanol, lauryl mercaptan, glycidyl mercaptan, mercaptoacetic acid, thioglycollic acid, 2-ethylhexyl thioglycollate, 2,3-dimethylmercapto-1-propanol, and alpha-methyl-styrene-dimer.

In one embodiment said amorphous polymer is the sole adhesive component within said pressure sensitive adhesive composition.

In one embodiment said pressure sensitive adhesive composition further comprises a crosslinking agent, wherein, preferably, said amorphous polymer and said crosslinking agent together are the sole adhesive component within said pressure sensitive adhesive composition.

Preferably, the pressure sensitive adhesive composition of the present invention contains a crosslinking agent for further enhancing the cohesive strength of the adhesive. Preferred crosslinking agents are e.g. (without restrictions to these examples) polyfunctional epoxy compounds, such as diglycidyl-aniline or glycerol diglycidylether or the likes, a melamine curing system or a polyfunctional isocyanate compound such as toluenediisocyanate, hexamethylene diisocyanate, polymethylene polyphenyldiisocyanate, tris (p-isocyanatophenyl) thiophosphate, diphenyl-methanediisocyante, a reaction product obtained from trimethylolpropane and toluene diisocyanate, a reaction product obtained from trimethylolpropane and hexamethylenediisocyanate, polyetherpolyisocyanate and polyester polyisocyanate. Such a compound is used in an amount of, e.g. 0.001 to 20 parts per weight; preferably from 0.01 to 10 parts by weight, per 100 parts by weight of the acrylic polymer. These can be used alone or in combination.

In another embodiment said pressure sensitive adhesive composition additionally comprises a tackifier, and said amorphous polymer and said tackifier together are the sole adhesive component(s) within said composition, and wherein, preferably, said tackifier is present in said composition at from 10 to 50 parts by weight, with reference to 100 parts by weight of the amorphous polymer, wherein, preferably, said tackifier is a resin, such as coumarone-indene resin, a petroleum resin, a phenol resin, or a terpene-based resin, or a tackifier composed of an acrylic oligomer, without being limited to this list.

In one embodiment said pressure sensitive adhesive composition does not comprise a crystalline or partially crystalline polymer.

In one embodiment said thermally expandable particles have mean dimensions in the range of from 1 µm to 100 µm, preferably from 1 µm to 50 µm, more preferably form 5 µm to 30 µm and most preferably from 10 µm to 20 µm.

Preferably, said thermally expandable particles are present in said composition at from 10 to 150 parts by weight, with reference to 100 parts by weight of said amorphous polymer, pref erably said poly(acrylate).

In one embodiment said thermally expandable particles consist of a polymeric shell enclosing a substance, which is gasified upon heating.

In one embodiment, said blocked isocyanate compound is an isocyanate compound blocked by a blocking group. Blocking groups can be (without restrictions): alcohols, caprolactams, phenols, oximes, pyrazoles, and malonates.

In one embodiment said pressure sensitive adhesive composition further comprises an unblocked isocyanate compound, wherein a ratio of said unblocked isocyanate to blocked isocyanate is from 30 to 100%.

In one embodiment said pressure sensitive adhesive composition additionally comprises a blowing agent, wherein, preferably, said blowing agent is present in said composition at from 10 to 150 parts by weight, with reference to 100 parts by weight of said amorphous polymer, preferably said (poly-)acrylate.

In another embodiment the pressure sensitive adhesive composition additionally comprises extra additives, such as (without being limited to) anti-oxidants, lacquers or inks, or other constituents known in the art to be aids for certain adhesive properties.

In one embodiment said tape comprises a layer of a pressure sensitive adhesive composition as defined above, on one of said two surfaces of said layer of a thermally shrinkable polymer and, optionally, a release liner or no further layer on the respective other surface of said two surfaces of said layer of a thermally shrinkable polymer, wherein, preferably, said release liner, if present, is made of a material selected from the group comprising polyethylene, polyethylene terephthalate (PET), poly vinylchloride (PVC), paper, and any of the foregoing being treated with a release agent, such as wax, silicone. Such tape is sometimes herein also referred to as a "one-sided tape".

In another embodiment said tape comprises a layer of a pressure sensitive adhesive composition on both said two surfaces of said layer of a thermally shrinkable polymer, wherein said layers of said pressure sensitive adhesive composition are the same or different as defined above. Such tape is sometimes herein also referred to as a "double-sided tape" or a "two-sided" tape.

In this two-sided embodiment, preferably, said tape additionally comprises a release liner on one of said two layers of a pressure sensitive adhesive composition, wherein, preferably, said release liner is made of a material selected from the group comprising polyethylene, polyethylene terephthalate (PET), poly vinylchloride (PVC), paper, and any of the foregoing being treated with a release agent, such as wax, silicone.

The objects of the present invention are also solved by a method of connecting two bodies with each other, comprising the steps:
- applying a tape according to the present invention to one body on a surface of said body, such that one side of said tape is in contact with said surface of said body, and another side of said tape is exposed,
- bringing another body having a surface with its surface in contact with said exposed side of said tape, and
- exerting pressure on said tape.

In a preferred embodiment, said two bodies are subsequently, in a further step, disconnected from each other by applying heat to said tape, preferably by heating said tape to a temperature in the range from 100°C to 220°C for a period of 1 min to 10 min, preferably 5 to 7 min, most preferably 6 min.

The objects of the present invention are also solved by the use of a one-sided or double-sided tape according to the present invention for connecting two objects together or for connecting an object to a surface.

In a preferred embodiment said two objects or said one object and said surface are subsequently, in a further step, disconnected from each other by applying heat to said tape, preferably by heating said tape to a temperature in the range from 100°C to 220°C for a period of 1 min to 10 min, preferably 5 to 7 min, most preferably 6 min.

The term "amorphous", as used herein, is meant to refer to the absence of crystalline structures. An "amorphous polymer" is a polymer that is not crystalline.

"Initial adhesion force", as used herein, is meant to refer to the force that is required to peel the adhesive tape off a stainless steel plate prior to heat treatment, whereby the pull force is applied at a 180° angle and with a tensile velocity of 300 mm/min after a dwell time of 15 minutes.

The stainless steel plate consists of 1.1 mm thick stainless steel 1.4301 in accordance with the 2R quality defined in EN10088-2 having a bright annealed finish. The surface roughness height shall be (50 +/- 25) nm arithmetical average deviation from the mean line. Panels showing stains, discoloration, or a high number of scratches are not allowed.

A "thermally shrinkable polymer" is a polymer which, depending on the temperature at which such polymer is, may shrink. A "heat shrinkable polymer", as used herein, is a polymer which, upon the application of heat, shrinks. Such shrinking behaviour may be observed when, for example, such thermally or heat shrinkable polymer is used to produce a film of such polymer. If such film is subsequently thermally influenced, e.g. heated, it will shrink. Hence, without wishing to be bound by any theory, the shrinking thus observed may be due to an actual change of the structure of the individual polymer, or it may be due to the packing of the plurality of polymers within such film. Consequently, a "heat shrinkable polymer", as used herein, shows a shrinking behaviour when formed into a film and upon application of heat to said film.

Usually, such shrinkage is measured using standard methods known to someone skilled in the art. For example, the film may be heated to a temperature in the range of from 60°C to 220°C, preferably from 100°C to 200°C, more preferably from 120°C to 180°C, for a period of from 1 minute to 10 minutes.

Heat shrinkable polymers as such are known to a person skilled in the art and include without being limited thereto polyolefines, such as poly(ethylene), poly(propylene), poly(vinylchloride), poly(vinylidenefluoride) and mixtures of polyolefines, fluoropolymers, neoprene, silicone rubbers, polyesters, polyamides, cellulose acetate, ethyl cellulose, and mixtures of any of the foregoing. Such materials may be crosslinked or un-crosslinked.

The shrink behaviour of a heat shrinkable polymer may have preferred axes of shrinkage. Accordingly, such shrink behaviour may be characterised by the number of shrink axes. If there is only one preferred axis of shrinkage, such shrink behaviour is referred to as being "monoaxial", or if there are two preferred axes of shrinkage, such shrink behaviour is referred to as "biaxial".

The present invention relies on the interplay of a layer of a thermally shrinkable polymer, such as a heat shrinkable polymer and a layer of a pressure sensitive adhesive composition. It is to be noted, that the pressure sensitive adhesive composition does not rely on the presence of a crystalline or partially crystalline component.

In some embodiments, a tackifier may be used in the pressure sensitive adhesive composition. A "tackifier" as used herein is meant to refer to a material which is added to another material, such as for example a polymer, and endows this other material with adhesive properties. Tackifiers are known to a person skilled in the art and, in many instances, include a resin component.

The term "pressure sensitive adhesive" is meant to refer to a material which acts as an adhesive upon the application of pressure, by for example two surfaces which are pressed against each other and the pressure sensitive adhesive (PSA) is situated between them.

The term "blocked isocyanate" is meant to refer to a compound which is prepared by reacting an organic isocyanate with a blocking group that contains an active hydrogen atom, such as alcohols, caprolactams, phenols, oximes, pyrazoles, and malonates. The blocked isocyanate compound is stable at room temperature, but dissociates at temperatures in the range of from 100°C to 220°C, thereby regenerating the free isocyanate group, which then can react - like an "unblocked isocyanate" - with e.g. a polymer containing active hydrogen atoms to form an insoluble polymer.

It is clear to someone skilled in the art that the adhesive tape according to the present invention may, in addition to the recited layers, have additional layers, such as release liners commonly known to someone skilled in the art.

The objects of the present invention are also solved by a method of manufacturing an adhesive tape according to the present invention, comprising the steps
applying a layer of a pressure sensitive adhesive composition on a carrier,
applying a layer of a thermally shrinkable polymer onto said layer of said pressure sensitive adhesive composition, and
applying a further layer of a pressure sensitive composition onto said layer of said thermally shrinkable polymer wherein said layer(s) of a pressure sensitive adhesive composition and said layer of a thermally shrinkable polymer are as defined above, and wherein the two layers of a pressure sensitive adhesive composition may be the same or different. Optionally, if only a one-sided tape is desired, the first layer of a pressure sensitive adhesive composition may be left out.

The present invention provides an adhesive tape which enables the user to have the required properties during the total lifecycle of the to be adhered surfaces, and yet providing an easy separation at the moment of disassembly of the complex.

Specifically, in one embodiment a concept was developed which makes use of a heat shrinkable film as an intermedium layer between two adhesive layers. When the double-coated tape is exposed to a heat treatment, the film shrinks thus causing a clean and easy removal of the tape adhered to the substrate, and the substrates from one another.

The present invention also refers to a single coated tape, where only one side of the heat shrinkable film is covered with a specially designed pressure sensitive adhesive.

Specifically, in one embodiment the present invention provides for an adhesive tape containing (a) a heat shrinkable substrate, in which corona treatment and/or primer processing may be carried out and (b) a pressure sensitive adhesive composition (PSA) comprising preferably an acrylic polymer, in which the alkyl(meth)acrylate has an alkyl group of from 1 to 18 carbon atoms, as a monomer major component and, optionally, 50 parts and more by weight, based on 100 parts by weight of the whole of the monomer components, heat expandable particles and a blowing agent from 10 to 150 parts by weight, based on 100 parts by weight of the acrylic polymer. Optionally, a crosslinker, preferably of the isocyanate type from 0.5 to 10 parts by weight, based on 100 parts by weight of the acrylic polymer may be included in the pressure sensitive adhesive composition, wherein such isocyanate crosslinker comprises unblocked isocyanate and blocked isocyanate, and the ratio of unblocked to blocked isocyanate is from 30% to 100% by weight.

More specifically, the inventive concept of having a layer of a thermally shrinkable polymer and a layer of a pressure sensitive adhesive composition that comprises an amorphous polymer, and a) thermally expandable particles, or b) a blocked isocyanate, or c) both appears to work surprisingly well, even with adhesive tapes having high initial adhesion forces, such as initial adhesion force from 1300 cN/20mm to 3000 cN/20mm at a tensile velocity of 300 mm/min, and by the present invention the adhesion is reduced by more than 10% of its original value, upon heating said tape to a temperature in the range of from 100°C to 220°C for a period of 1 min to 10 min, preferably 5 - 7 min, most preferably 6 min.

Some examples for a pressure sensitive adhesive useful for the present invention (PSA) include natural rubber adhesives, synthetic rubber adhesives, acrylic adhesives, vinyl ether adhesives, polyurethane adhesives and silicone adhesives.

Thermally expandable particles are particles having a polymeric shell and filled with an appropriate substance, which can be easily gasified, and results in expansion after heating. Examples of commercially available thermal expandable particles are Micropearl (Matsumo Yushi Seiyaku and Expancel (Nobel Industries).

Upon heating of the tape according to the present invention the heat shrinkable material will shrink whereas at the same time the particles will expand. The combined effect of heat shrinking and expansion upon heating creates stresses which will reduce the adhesion values significantly.

The adhesive tape according to the present invention may, within the PSA composition, optionally include blowing agents. A blowing or foaming agent is a product, which decomposes upon heating thus forming volatile components, which will expand the polymer matrix in which it is embedded. The use of these modified pressure sensitive adhesives in combination with heat shrinkable material and thermally expandable particles in the construction will further reduce adhesion values. Without being limited to this classification blowing agents comprise azo compounds, hydrazine compounds, carbazides, tetrazoles, nitroso compounds and carbonates. They commonly release gases such as nitrogen, carbon dioxide, carbon monoxide or ammonia. Ammonia is less desirable due to possible interaction with the matrix. Examples of the use of these agents are direct gassing for the foaming of thermoplastic resins, extrusion applications, injection molding and blow molding.

The adhesive tape according to the present invention may, as mentioned above, within the PSA composition, in one embodiment also include isocyanate crosslinkers, comprising blocked and unblocked isocyanates. In a particularly preferred embodiment, the combination of the blocked and unblocked isocyanates in the formulation with the use of the thermally shrinkable polymer gives a further improvement of the shrinking properties.

In the following, reference is made to the following examples, which are given to illustrate, not to limit the present invention.

### EXAMPLE 1

### Preparation of a pressure sensitive adhesive tape

100 parts by weight of butylacrylate, 5 parts by weight of vinylacetate, and 3 parts by weight of acrylic acid were copolymerised with each other by solvent polymerisation. Appropriate solvents and initiators were added for polymerisation. This yielded a solution containing an acrylic polymer with an average molecular weight of 600.000. The polymer solution was then mixed with 15 parts by weight of a terpene phenolic rosin, 10 parts by weight of a glycerol ester of a partially hydrogenated rosin, 10 parts by weight of a pentaerythtriolester of a polymerised rosin, and 5 parts by weight of a methylester of hydrogenated rosin. The adhesive was further crosslinked with a reaction product from trimethylolpropane and toluene diisocyanate.

### EXAMPLE 2

The resulting adhesive of example 1 was knife coated on a siliconised PET liner. After drying at 80°C for 3 min in a forced air oven, the heat shrinkable film was put onto the pressure sensitive adhesive layer, over coated with another pressure sensitive adhesive layer and dried in a forced air oven at 80°C for 1 min. The thickness of the resulting adhesive film was 120 µm. The heat shrinkable film was a polyolefin FXL-R from Flex International with 15 µm thickness. FXL are trademarks of Flex International and refer to polyolefinic sheets produced by and available from Flex International, Netherlands.

The reference had two layers of pressure sensitive adhesive on a siliconised PET liner, but no heat shrinkable film.

A 20 mm strip of the resulting tapes was applied to a stainless steel plate and put in a forced air oven for 6 minutes at 150°C. After equilibration to RT for 60 min, 180° peel adhesion was measured. The pulling speed was 300mm/min.

### 180° peel adhesion [cN/20mm]

| | RT | 150°C 6 min | adh. r. |
|---|---|---|---|
| A. Reference | 2306 | 4103 | - |
| B. Construction with heat shrinkable film | 2257 | 1867 | 17% |
| (adh. r. = adhesion reduction) | | | |

### EXAMPLE 3

20% by weight (based on polymer solid content) thermally expandable particles, commercially available as "Expancel 051DU40" were added to the adhesive solution of example 1 and the resulting PSA layer was coated onto a siliconised PET liner. The coating was dried in a forced air oven at 80°C for 3 min. On top of this layer a heat shrinkable film FXL-R 15-µ was laminated and a second layer of the adhesive solution of example 1 was coated onto it. After drying at 80°C for 1 min in a forced air oven, the tape was cooled to RT for 1 hour. A 20 mm wide strip of the tape was adhered to a stainless steel plate and put in a forced air oven for 6 minutes at 150°C. After equilibration to RT for 1 hour, 180° peel adhesion was tested at 300mm/min pulling speed.

The control was the same construction except no heat shrinkable film was used.

### 180° peel adhesion [cN/20mm]

| | RT | 150°C 6min | adh. r. |
|---|---|---|---|
| A. Construction having one layer of thermally expandable particles-containing pressure sensitive adhesive and one layer of 'standard' pressure sensitive adhesive | 2631 | 2654 | - |
| B. Same construction as A, but with heat- shrinkable film | 2693 | 1320 | 51 % |

### EXAMPLE 4

The same procedure as in example 3 was used. Both PSA layer contained 20% thermally expandable particles. The heat shrinkable film was FXL-R from Flex International.

### 180° peel adhesion [cN/20mm]

| | RT | 150°C 6min | adh. r. |
|---|---|---|---|
| 2 layers of thermally expandable particles-containing pressure sensitive adhesives | 2717 | 2653 | 2,4% |
| Same construction as previous, but with heat-shrinkable film | 2332 | 1080 | 54% |

### EXAMPLE 5

Same procedure as in example 4. The heat shrinkable film was FXL-K 25-µ from Flex International with a free shrinkage of 27% at 100°C and of 74% at 120°C according to ASTM-method D1204. Both PSA layers contained 20% thermally expandable particles and 20% blowing agent Tracel DB140 (azodicarbonamide combined with sulfohydrazide and Zn®) (Tramaco).

A 20 mm strip of the resulting tape was applied to a stainless steel plate and put in a forced air oven at 120°C for 6 minutes. After equilibration to RT for 1 hour, 180° peel adhesion was measured at 300mm/min pulling speed.

### 180° peel adhesion [cN/20mm]

| | RT | 120°C 6 min | adh. r. |
|---|---|---|---|
| 2 layers of | | | |
| thermally expandable particles- containing pressure sensitive adhesives 2 layers of | 1608 | 2273 | - |
| thermally expandable particles- containing pressure sensitive adhesives, combined with heat-shrinkable film FXL-K | 1344 | 571 | 58% |

### EXAMPLE 6

20% by weight (based on polymer solid content) of the blowing agent Tracel DB140 (azodicarbonamide combined with sulfohydrazide and Zn®) (Tramaco) was added to the adhesive solution of example 1. The resulting pressure sensitive layer was knife coated on a siliconised PET liner and dried in a forced air oven at 80°C for 3 min. After cooling to room temperature a heat shrinkable film FXL-K 25-µ (Flex International) was laminated onto this pressure sensitive adhesive layer. The adhesive solution of example 1 containing 20% by weight (based on solid content of the adhesive solution of example 1) thermally expandable particles Expancel 05 1 DU40 was coated on top of the heat shrinkable film, and dried in a forced air oven at 80°C for 1 min. After cooling to room temperature for 1 hour 20mm strips were applied to stainless steel plates. One plate was exposed to 120°C for 6 min and another plate to 180°C for 6 min. After cooling to RT for 1 hour, 180° peel adhesion was measured at a pulling speed of 300mm/min.

### 180°peel adhesion [cN/20mm]

| | RT | 120°C 6min | adh. r. | 180°C 6 min | adh. r. |
|---|---|---|---|---|---|
| A | 1760 | 2374 | - | 2237 | - |
| B | 1371 | 982 | 28,4% | 338 | 75% |

| | | | | | |
|---|---|---|---|---|---|
| A = Tape construction having one layer of blowing agent containing pressure sensitive adhesive and one layer of thermally expandable particles containing pressure sensitive adhesive B = same construction with heat shrinkable film. | | | | | |

### EXAMPLE 7

30% by weight (based on crosslinker content) of an aliphatic blocked polyisocyanate based on hexamethylene diisocyanate (HDI) and isophorone diisocyanate (IPDI) [blocked NCO content: 8.2%; solids: 75% ± 2; viscosity: 1,000 ± 300 mPa•s at 23°C] was added to the adhesive solution of example 1. The resulting pressure sensitive layer was knife coated on a siliconised PET liner and dried in a forced air oven at 80°C for 3 min. After cooling to room temperature a heat shrinkable film FXL-K 25-µ (Flex International) was laminated onto this pressure sensitive adhesive layer. The adhesive solution of example 1 containing 20% by weight (based on solid content of the standard adhesive) of thermally expandable particles Expancel 051DU40 was coated on top of the heat shrinkable film and dried in a forced air oven at 80°C for 1 min. After cooling to room temperature for 1 hour 20mm strips were applied to stainless steel plates. One plate was exposed to 120°C for 6 min and another plate to 180°C for 6min. After cooling to RT for 1 hour, 180° peel adhesion was measured at a pulling speed of 300 mm/min.

### 180°peel adhesion [cN/20mm]

| | RT | 120°C 6min | adh. r | 150°C 6 min | adh. |
|---|---|---|---|---|---|
| A | 1382 | 1856 | - | 2002 | - |
| B | 1535 | 1660 | - | 1374 | 10% |
| C | 1561 | 2241 | - | 2089 | - |
| D | 1421 | 1025 | 28% | 641 | 55% |

| | | | | | |
|---|---|---|---|---|---|
| A = Tape construction having two layers of pressure sensitive adhesive B = same construction as A with heat shrinkable film. C = Tape construction having two layers of blocked isocyanate containing pressure sensitive adhesive D = same construction as C with heat shrinkable film. | | | | | |

The features of the present invention disclosed in the specification, the claims and/or in the accompanying drawings, may, both separately and in any combination thereof, be material for realizing the invention in various forms thereof.

## Claims

1. An adhesive tape comprising:
- a layer of a thermally shrinkable polymer, said layer having two surfaces opposite each other,
- a layer of a pressure sensitive adhesive composition on one of said two surfaces, said pressure sensitive adhesive composition comprising an amorphous polymer, thermally expandable particles and at least one blocked isocyanate compound.

2. The tape according to claim 1, wherein said adhesive tape has an initial adhesion force from 1300 cN/20 mm to 3000 cN/20 mm at a tensile velocity of 300 mm/min, and the adhesion is reduced by more than 10% of its original value, upon heating said tape to a temperature in the range of from 100°C to 220°C for a period of 1 min to 10 min, or wherein said adhesive tape has an initial adhesion force of more than 1400 cN/20 mm at a tensile velocity of 300 mm/min, and the adhesion is reduced preferably by more than 50% of its original value upon heat treatment.

3. The tape according to any of claims 1 - 2, wherein said thermally shrinkable polymer is a heat shrinkable polymer, wherein, preferably, said layer of said heat shrinkable polymer reduces its surface area by 20% - 90%, with reference to its surface area at 15°C to 30°C, as measured upon heating said tape to 120°C for a period of from 1 minute to 10 minutes, wherein, more preferably, said heat shrinkable polymer is a polyolefine, such as polyethylene, polypropylene, and mixtures of polyolefines, fluoropolymers, neoprene and silicone rubbers, and mixtures of any of the foregoing, wherein, even more preferably, said layer of a heat shrinkable polymer has monoaxial or biaxial shrink behavior.

4. The tape according to any of the foregoing claims, wherein said amorphous polymer is a natural rubber, a synthetic rubber, an acrylic polymer, a vinyl ether polymer, a polyurethane polymer, or a silicone polymer, or a combination of any of the foregoing, or said amorphous polymer is an acrylic polymer, wherein, preferably, said acrylic polymer is a (poly)acrylate, wherein the acrylic polymer can be composed of monomers such as alkylacrylates or alkylmethacrylates, each having 1 to 18 carbon atoms in the alkyl group, wherein, preferably, said amorphous polymer is the sole adhesive component within said pressure sensitive adhesive composition, or wherein, preferably, said adhesive composition further comprises a crosslinking agent, wherein, more preferably, said amorphous polymer and said crosslinking agent together are the sole adhesive component within said pressure sensitive adhesive composition, and wherein said crosslinking agent is present in said composition at from 0.001 to 20 parts by weight, with reference to 100 parts by weight of the amorphous polymer, or wherein, preferably, said pressure sensitive adhesive composition additionally comprises a tackifier, and said amorphous polymer and said tackifier together are the sole adhesive component within said composition, and wherein, preferably, said tackifier is present in said composition at from 10 to 50 parts by weight, with reference to 100 parts by weight of the amorphous polymer.

5. The tape according to any of the foregoing claims, wherein said pressure sensitive adhesive composition does not comprise a crystalline or partially crystalline polymer.

6. The tape according to any of the foregoing claims, wherein said thermally expandable particles have mean dimensions in the range of from 1 µm to 100 µm, wherein, preferably, said thermally expandable particles are present in said composition at from 50 to 150 parts by weight, with reference to 100 parts by weight of said amorphous polymer, preferably said poly(acrylate), wherein, more preferably, said thermally expandable particles consist of a polymeric shell enclosing a substance, which is gasified upon heating.

7. The tape according to any of the foregoing claims, wherein said pressure sensitive adhesive composition further comprises an unblocked isocyanate compound, wherein, pref erably, a ratio of said unblocked to blocked isocyanate is from 30% to 100%.

8. The tape according to any of the foregoing claims, wherein said pressure sensitive adhesive composition additionally comprises a blowing agent, wherein, preferably, said blowing agent is present in said composition at from 50 to 150 parts by weight, with reference to 100 parts by weight of said amorphous polymer, preferably said poly(acrylate).

9. The tape according to any of the foregoing claims, wherein said tape comprises a layer of a pressure sensitive adhesive composition as defined in any of claims 1 — 8, on one of said two surfaces of said layer of a shrinkable polymer and, optionally, a release liner or no further layer on the respective other surface of said two surfaces of said layer of a thermally shrinkable polymer, wherein, preferably, said release liner is made of a material selected from the group comprising polyethylene, polyethylene terephthalate (PET), polyvinylchlorid (PVC), paper, and any of the foregoing being treated with a release agent, such as wax and silicone.

10. The tape according to any of claims 1 - 8, wherein said tape comprises a layer of a pressure sensitive adhesive composition on both said two surfaces of said layer of a thermally shrinkable polymer, wherein said layers of said pressure sensitive adhesive composition are the same or different as defined in any of the claims 1 - 8, wherein, preferably, said tape additionally comprises a release liner on one of said two layers of a pressure sensitive adhesive composition, and wherein, more preferably, said release liner is made of a material selected from the group comprising polyethylene, polyethylene terephthalate (PET), polyvinylchlorid (PVC), paper, and any of the foregoing being treated with a release agent, such as wax and silicone.

11. A method of connecting two bodies with each other, comprising the steps:
- applying a tape according to any of claims 1 - 8 and 10 to one body on a surface of said body, such that one side of said tape is in contact with said surface of said body, and another side of said tape is exposed,
- bringing another body having a surface with its surface in contact with said exposed side of said tape, and
- exerting pressure on said tape, wherein, preferably, said two bodies are subsequently, in a further step, disconnected from each other by applying heat to said tape, preferably by heating said tape to a temperature in the range from 100°C to 220°C for a period of 1 min to 10 min.

12. Use of a tape according to any of claims 1 - 9 or of a tape according to any of claims 1 - 8 and 10 for connecting two objects together or for connecting an object to a surface, wherein, preferably, said two objects or said one object and said surface are subsequently, in a further step, disconnected from each other by applying heat to said tape, preferably by heating said tape to a temperature in the range from 100°C to 220°C for a period of 1 min to 10 min.
